# EUROPÄISCHE PATENTSCHRIFT

(11) **EP 1 495 939 B1**
(45) Veröffentlichungstag und Bekanntmachung des Hinweises auf die Patenterteilung: **03.01.2007**
(21) Anmeldenummer: 04013354.8
(22) Anmeldetag: 07.06.2004
(51) Int. Cl.: B62D 1/06

(54) **Fahrzeuglenkrad mit Heizelement**
Vehicle steering wheel with a heating element
Volant de direction avec un élément de chauffage

(30) Priorität: 11.07.2003 DE 20310682 U
(43) Veröffentlichungstag der Anmeldung: 12.01.2005
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Kitzhofer, Thomas

(56) Entgegenhaltungen:
- DE-U- 29 712 839
- US-A1- 2001 003 336
- PATENT ABSTRACTS OF JAPAN Bd. 0170, Nr. 31 (M-31356), 21. Januar 1993 (1993-01-21) & JP 4 254254 A (MATSUSHITA ELECTRIC IND CO LTD), 9. September 1992 (1992-09-09)

## Beschreibung

Die Erfindung betrifft ein Fahrzeuglenkrad mit einer Außenhaut, einem Lenkradkranz und einem integrierten Heizelement, das eine erste Leitschicht, eine zweite Leitschicht und eine dazwischenliegende elektrisch leitfähige Heizschicht aufweist, wobei das Heizelement unter der Außenhaut liegt.

In der DE 297 12 839 U1 ist ein Fahrzeuglenkrad beschrieben, das mit einer elektrisch leitfähigen Kunststoffschicht umspritzt ist. Die Kunststoffschicht ist an einer Stelle radial durch einen Isolierstreifen unterbrochen und zu beiden Seiten des Isolierstreifens kontaktiert. So ist es möglich, einen elektrischen Strom durch die Kunststoffschicht zur Erwärmung derselben zu schicken, wobei dieser Strom den gesamten Umfang des Lenkradkranzes, bezogen auf die Drehachse, durchfließt. Wegen des relativ hohen spezifischen Widerstands der Kunststoffschicht und der Länge der Leitstrecke von über einem Meter muß eine vergleichsweise hohe Spannung an die Kontakte gelegt werden, um eine ausreichende Heizleistung zu erzielen.

Aus dem Stand der Technik sind ferner Heizelemente bekannt, die eine erste Leitschicht, eine zweite Leitschicht und eine dazwischenliegende, elektrisch leitfähige Heizschicht gemäß dem Oberbegriff des Anspruchs 1 aufweisen. Beispielsweise ist das in der US 2001/0003336 A1 beschriebene Heizelement in einer Ausführungsform ein mehrlagiges Verbundbauteil, an dessen erste großflächige Leitschicht sich großflächig die Heizschicht anschließt, welche wiederum großflächig an die zweite Leitschicht angrenzt. Die einzelnen Schichten sind dabei vorzugsweise keramische Schichten, die mittels Plasmasprühtechnik auf ein Substrat aufgebracht werden. Als Anwendungsbeispiel für das offenbarte Heizelement ist in der US 2001/0003336 A1 unter anderem eine Lenkradheizung benannt, wobei der Aufbau eines Fahrzeuglenkrades mit einem solchen Heizelement jedoch nicht näher erläutert ist.

Aufgabe der Erfindung ist es, ein Fahrzeuglenkrad mit einem Heizelement zu schaffen, das einfach und kostengünstig hergestellt werden kann und bei Ansteuerung mit geringer Spannung eine gleichmäßige Heizleistung bietet.

Zu diesem Zweck ist gemäß Anspruch 1 bei einem Fahrzeuglenkrad der eingangs genannten Art vorgesehen, daß das Heizelement ein mehrlagiges, dünnes, großflächiges

Verbundteil ist, dessen erste großflächige Leitschicht sich im radialen Querschnitt durch den Lenkradkranz gesehen innen erstreckt, an die sich nach außen großflächig die aus einem Elastomer gebildete Heizschicht anschließt, an welche wiederum großflächig die zweite, äußere Leitschicht angrenzt. Auf diese Weise ergibt sich ein kurzer Weg für den Stromfluß und damit ein geringer absoluter Widerstand, bei dem mit geringer Spannung eine hohe Heizleistung erzielt werden kann. Durch die im Vergleich zur Querschnittsfläche großen Kontaktflächen ist außerdem eine gleichmäßiger Stromfluß und daher eine gleichmäßige Erwärmung der Heizschicht gewährleistet. Radialer Querschnitt bedeutet vorliegend eine Schnittebene, in welcher die gedachte Mittelachse des Fahrzeuglenkrads liegt.

Da die Heizschicht von einem Elastomer gebildet ist, kann das Heizelement bereits als Teil der elastischen Ummantelung des Fahrzeuglenkrades dienen.

Gemäß einer vorteilhaften Ausführungsform der Erfindung ist vorgesehen, daß wenigstens eine der Leitschichten von einer aufgedampften Metallschicht gebildet ist. Diese Metallschicht kann sehr dünn ausgeführt werden, beispielsweise 50µm, woraus ein verringertes Gewicht des Heizelements und auch eine Einsparung an Kontaktmaterial für die Leitschichten resultiert.

Weitere vorteilhafte Ausführungsformen ergeben sich aus den Unteransprüchen.

Die Erfindung wird nachfolgend anhand einer bevorzugten Ausführungsform ausführlich beschrieben. Dabei wird Bezug genommen auf die beigefügten Zeichnungen, in welchen zeigt:
- Figur 1 einen radialen Querschnitt durch ein erfindungsgemäßes Fahrzeuglenkrad; und
- Figur 2 einen vergrößerten Ausschnitt des Bereiches II in Figur 1.

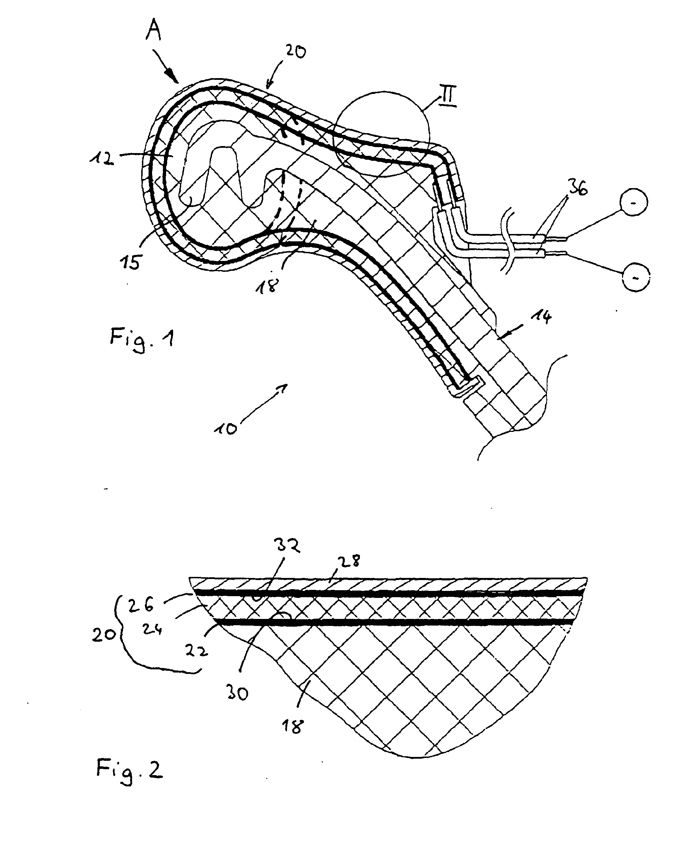

In Figur 1 ist in einem Querschnitt ein Teil eines Fahrzeuglenkrads 10 mit einem Lenkradkranz 12 und einer Speiche 14 zu sehen. Aufgebaut ist das Fahrzeuglenkrad 10 aus einem Lenkradskelett 15, beispielsweise aus Stahl, das wie üblich mit einer Polsterung 18 aus einem Kunststoff umschäumt ist. Die Polsterung 18 ist im Bereich des Lenkradkranzes 12 und teilweise über die Speichen 14 reichend von einem großflächigen, dünnen, als Verbundbauteil ausgeführten Heizelement 20 umgeben.

Das Heizelement 20 ist sandwichartig aus mehreren Schichten aufgebaut, deren Abfolge im Querschnitt durch den Lenkradkranz 12 und die Speiche 14 in Figur 2 deutlich zu erkennen ist. Im Querschnitt durch den Lenkradkranz 12 radial bezogen auf den kreisförmigen Querschnitt des Lenkradkranzes 12, d.h. in Richtung des Pfeils A gesehen innen, direkt auf der Polsterung 18, befindet sich eine erste großflächige Leitschicht 22 aus einem elektrisch gut leitfähigen Material. An die erste Leitschicht 22 schließt sich nach außen vollflächig eine elektrisch leitfähige Heizschicht 24 an, an die wiederum außenseitig eine zweite großflächige Leitschicht 26 grenzt. Eine Deckschicht beispielsweise aus Leder bildet eine Außenhaut 28, so daß das Heizelement 20 unmittelbar unter der Außenhaut 28 angeordnet ist.

Das Heizelement 20 verläuft unter der Außenhaut 28 im Querschnitt durch den Lenkradkranz 12 gesehen als Ringsegment. Wie in Figur 1 durch die gestrichelten Linien angedeutet ist, umgibt das Heizelement 20 den Lenkradkranz außerhalb der Abschnitte, an denen der Lenkradkranz 12 mit einer Speiche 14 verbunden ist, als zumindest annähernd geschlossener Ring.

Die Heizschicht 24 grenzt mit einer ersten Kontaktfläche 30 an die erste Leitschicht 22 und mit einer gegenüberliegenden zweiten Kontaktfläche 32 an die zweite Leitschicht 26. In der gezeigten Ausführungsform erstreckt sich die Heizschicht 24 über den gesamten Umfang des Lenkrades, wobei die Leitschichten 22 und 26 die beiden Kontaktflächen 30, 32 der Heizschicht 24 fast vollständig bedecken. Die Kontaktflächen 30, 32 sind daher groß im Vergleich zur Querschnittsfläche Q der Heizschicht 24.

Im Bereich der Speiche 14 sind die Leitschichten 22, 26 mit Anschlußdrähten 36 kontaktiert, durch welche dem Heizelement 20 ein Heizstrom I_{H} zugeführt werden kann.

Die Heizschicht 24 besteht aus einem elektrisch leitfähigen Kunststoff, vorzugsweise auf Basis von Silikon, Kautschuk oder anderen gießbaren Elastomeren. Dadurch bleibt für den Benutzer des Fahrzeuglenkrades 10 der haptische Eindruck erhalten, den er von einem elastisch umschäumten Lenkrad gewohnt ist. Die Dicke der Heizschicht 24 beträgt vorzugsweise 0,5 bis 2,5 mm und ist so gewählt, daß in Abhängigkeit vom spezifischen Widerstand des leitfähigen Kunststoffs und der Größe der Kontaktflächen 30, 32 die gewünschte Heizleistung erzielt werden kann.

Für die Leitschichten 22, 26 sind vorzugsweise Folien aus Aluminium, Kupfer oder anderen leitenden Legierungen vorgesehen. Die Dicke dieser Folien ist abgestimmt auf die Leitfähigkeit der Heizschicht 24 und beträgt vorzugsweise 0,1 bis 0,3 mm.

Da die Leitschichten 22, 26 eine wesentlich höhere Leitfähigkeit als die Heizschicht 24 mit einem typischen Widerstand von ca. 3 bis 4 Ohm aufweisen, sind die Leitschichten 22, 26 lediglich als elektrische Zuleitungen zu verstehen. Die Erwärmung durch den zugeführten Heizstrom I_{H} findet im wesentlichen in der Heizschicht 24 statt.

Gemäß einer alternativen Ausführungsform kann vorgesehen sein, daß sich das Heizelement 20 nicht über den gesamten Lenkradkranz 12 erstreckt, sondern nur über Bereiche, in denen eine Beheizung erwünscht ist.

Gemäß einer weiteren Variante können alternativ eine oder beide Leitschichten 22, 26 als aufgesprühte oder aufgedampfte Metallschicht ausgeführt sein. In diesem Fall hat sich bereits eine wesentlich geringere Dicke der Leitschichten 22, 26 von beispielsweise 50 µm als ausreichend erwiesen. Dies hat den Vorteil einer geringeren Beeinträchtigung der elastische Nachgiebigkeit des Lenkrades. Außerdem resultieren aus den dünneren Leitschichten Gewichts- und Materialeinsparungen.

Zur Herstellung des erfindungsgemäßen Fahrzeuglenkrades 10 wird das mit der Polsterung 18 umschäumte Lenkradskelett in dem zu beheizenden Bereich, also am Lenkradkranz 12 und am anschließenden Abschnitt der Speichen 14 mit der ersten Leitschicht 22 beispielsweise in Form einer Metallfolie umgeben. Die erste Leitschicht 22 wird dann mit dem leitenden Elastomer umgossen, das die Heizschicht 24 bildet. Anschließend wird die Heizschicht 24 mit der zweiten Leitschicht umgeben, die wieder eine Metallfolie sein kann. Abschließend erfolgt das Umledem des Lenkrades mit der Deckschicht, welche die Außenhaut 28 bildet, wie es aus dem Stand der Technik hinreichend bekannt ist.

Ein alternatives Herstellungsverfahren beruht darauf, daß die Schichten des Heizelementes 20 nicht einzeln auf das Lenkrad aufgebracht werden, sondern als separates Bauteil zunächst auf den Zuschnitt der Deckschicht aufgebracht, beispielsweise aufgeklebt werden. Anschließend wird die Deckschicht mit dem kompletten Heizelement 20 in herkömmlicher Weise am Lenkradskelett befestigt, beispielsweise geklebt oder genäht. Dies hat den Vorteil, daß beim Zusammenfügen des Heizelements 20 nicht das gesamte schwere Lenkradskelett gehandhabt werden muß.

## Patentansprüche

1. Fahrzeuglenkrad (10) mit einer Außenhaut (28), einem Lenkradkranz (12) und einem integrierten Heizelement (20), das eine erste Leitschicht (22), eine zweite Leitschicht (26) und eine dazwischenliegende elektrisch leitfähige Heizschicht (24) aufweist, wobei das Heizelement unter der Außenhaut liegt, und wobei das Heizelement (20) ein mehrlagiges, dünnes, großflächiges Verbundbauteil ist, dessen erste großflächige Leitschicht (22) sich im radialen Querschnitt durch den Lenkradkranz (12) gesehen innen erstreckt, an die sich nach außen großflächig die Heizschicht (24) anschließt, an welche wiederum großflächig die zweite, äußere Leitschicht (26) angrenzt, **dadurch gekennzeichnet, dass** die Heizschicht (24) von einem Elastomer gebildet wird.

2. Fahrzeuglenkrad nach Anspruch 1, **dadurch gekennzeichnet, daß** das Heizelement (20) unmittelbar unter der Außenhaut (28) angeordnet ist.

3. Fahrzeuglenkrad nach Anspruch 1 oder 2, **dadurch gekennzeichnet, daß** das Heizelement (20), im radialen Querschnitt durch den Lenkradkranz (12) gesehen, unter der Außenhaut (28) als Ringsegment verläuft.

4. Fahrzeuglenkrad nach einem der vorhergehenden Ansprüche, **dadurch gekennzeichnet, daß** der Lenkradkranz (12) Abschnitte aufweist, an denen er mit einer Speiche (14) verbunden ist, und daß das Heizelement (20), im radialen Querschnitt durch den Lenkradkranz gesehen, außerhalb dieser Abschnitte den Lenkradkranz als zumindest annähernd geschlossener Ring umgibt.

5. Fahrzeuglenkrad nach einem der vorhergehenden Ansprüche, **dadurch gekennzeichnet, daß** wenigstens eine der Leitschichten (22, 26) von einer elektrisch leitenden Folie gebildet ist.

6. Fahrzeuglenkrad nach einem der vorhergehenden Ansprüche, **dadurch gekennzeichnet, daß** wenigstens eine der Leitschichten (22, 26) von einer aufgedampften Metallschicht gebildet ist.

## Claims

1. A vehicle steering wheel (10) comprising an outer skin (28), a steering wheel rim (12), and an integrated heating element (20) which has a first conducting layer (22), a second conducting layer (26) and an electrically conductive heating layer (24) lying therebetween, the heating element lying under the outer skin and the heating element (20) being a multi-layered, thin, large-area composite component, the first large-area conducting layer (22) of which extends inside as viewed in a radial cross-section through the steering wheel rim (12) and is adjoined towards the outside over a large area by the heating layer (24), which in turn is bordered over a large area by the second, outer conducting layer (26), **characterized in that** the heating layer (24) is formed by an elastomer.

2. The vehicle steering wheel according to Claim 1, **characterized in that** the heating element (20) is arranged directly under the outer skin (28).

3. The vehicle steering wheel according to Claim 1 or 2, **characterized in that** the heating element (20), as viewed in a radial cross-section through the steering wheel rim (12), runs as a ring segment under the outer skin (28).

4. The vehicle steering wheel according to any of the preceding claims, **characterized in that** the steering wheel rim (12) has sections at which it is connected with a spoke (14), and that outside these sections the heating element (20), as viewed in a radial cross-section through the steering wheel rim, surrounds the steering wheel rim as an at least approximately closed ring.

5. The vehicle steering wheel according to any of the preceding claims, **characterized in that** at least one of the conducting layers (22, 26) is formed by an electrically conducting foil.

6. The vehicle steering wheel according to any of the preceding claims, **characterized in that** at least one of the conducting layers (22, 26) is formed by a metal layer applied by vapour deposition.

## Revendications

1. Volant de direction (10) comportant une peau extérieure (28), une couronne de volant de direction (12) et un élément chauffant (20) intégré qui présente une première couche conductrice (22), une deuxième couche conductrice (26) et une couche chauffante (24) électroconductrice située entre celles-ci, l'élément chauffant étant situé sous la peau extérieure et l'élément de chauffage (20) étant un composite de grande surface, mince et à plusieurs couches, dont la première couche conductrice (22) de grande surface s'étend à l'intérieur, vue en section transversale radiale à travers la couronne de volant de direction (12), et à laquelle la couche chauffante (24) se raccorde vers l'extérieur sur une grande surface, à laquelle la deuxième couche conductrice extérieure (26) est à son tour adjacente sur une grande surface, **caractérisé en ce que** la couche chauffante (24) est formée par un élastomère.

2. Volant de direction selon la revendication 1, **caractérisé en ce que** l'élément chauffant (20) est agencé directement au-dessous de la peau extérieure (28).

3. Volant de direction selon la revendication 1 ou 2, **caractérisé en ce que** vu en section transversale radiale à travers la couronne de volant de direction (12), l'élément chauffant (20) s'étend en tant que segment annulaire au-dessous de la peau extérieure (28).

4. Volant de direction selon l'une des revendications précédentes, **caractérisé en ce que** la couronne de volant de direction (12) présente des tronçons au niveau desquels elle est reliée à un rayon (14), et **en ce que** vu en section transversale radiale à travers la couronne de volant de direction, l'élément chauffant (20) entoure la couronne de volant de direction en dehors de ces tronçons, à la manière d'une bague au moins approximativement fermée.

5. Volant de direction selon l'une des revendications précédentes, **caractérisé en ce qu'**au moins une des couches conductrices (22, 26) est formée par une feuille électroconductrice.

6. Volant de direction selon l'une des revendications précédentes, **caractérisé en ce qu'**au moins une des couches conductrices (22, 26) est formée par une couche métallique métallisée sous vide.
